# EUROPEAN PATENT APPLICATION

(11) **EP 3 796 224 A1**
(43) Date of publication of application: **24.03.2021**
(21) Application number: 19306145.4
(22) Date of filing: 20.09.2019
(51) Int. Cl.: G06K 19/07

(54) **METHOD FOR MANAGING A MULTI-APPLICATION CONTACTLESS DEVICE**

(71) Applicant: Thales Dis France SA, 92190 Meudon (FR)
(72) Inventor: OUGOURLOU-OGLOU, Isabelle, 13881 GEMENOS CEDEX (FR); SCHUH, Jean-François, 13881 GEMENOS CEDEX (FR); DE JESUS, Christopher, 13881 GEMENOS CEDEX (FR)
(74) Representative: Grevin, Emmanuel

(57) **Abstract**

The invention is a method for managing a multi-application contactless device that includes a memory storing both a first configuration data whose activation is required to expose a first application to a contactless reader and a second configuration data whose activation is required to expose a second application to the contactless reader. The method comprises a step in which a sensor of the contactless device provides a value by evaluating an electromagnetic field generated by the contactless reader. The method comprises a step in which a selector unit of the contactless device activates one of said first and second configuration data by using said value.

## Description

### (Field of the invention)

The present invention relates to methods of managing multi-application contactless devices. It relates particularly to methods for activating a contactless profile in a contactless device working in short-range communication.

### (Background of the invention)

Communication protocols in contactless domain are based on the exchanging of data via a modulated magnetic field. A contactless reader (also known as Proximity Coupling Device) has an antenna which is able to modulate the electromagnetic field (also called Radio Frequency field or RF field) and to provide energy to contactless devices like contactless cards. Both the contactless reader and the contactless device communicate thanks to an inductive coupling in a field frequency which may equal to 13.56 MHz. In particular, the ISO/IEC14443, ISO/IEC21481 and ISO/IEC18092 standards provide modulation technologies and communication protocols which may be used in contactless domain.

A passive contactless device is unable to generate a modulated electromagnetic field. The passive device uses the magnetic field produced by another contactless device. Contactless cards are generally passive device. Contactless cards may contain several configurations and applicative profiles. For example a multi-application Contactless card may embed several contactless applications into a single chip.

When presented to a contactless reader, the reader may scan the field and try to select a specific contactless application (corresponding to an associated contactless profile) in the contactless card. Nowadays, each contactless card contain a predefined active contactless profile information stored into its contactless settings that has been previously configured during the manufacturing stage. The content of the contactless settings is frozen at an early phase and no means is intended to update the contactless settings during the life of the contactless card.

Many infrastructures relying on contactless readers are designed to wait for a single specific application/profile provided by contactless cards. In other words, most of the contactless readers are designed to detect only one kind of contactless card based on the Answer-To-Reset (ATR) reconstructed from the data retrieved from the contactless profile settings. Thus a contactless reader waiting for a predefined contactless application may be unable to detect the relevant application (even if embedded in the contactless card) if the contactless profile settings is preset with an activated configuration data corresponding to another application.

There is a need for allowing a contactless reader to access a relevant application embedded in a contactless device.

### (Summary of the Invention)

The invention aims at solving the above mentioned technical problem.

An object of the present invention is a multi-application contactless device including a memory storing first and second a first applications. The memory stores a first configuration data whose activation is required to expose the first application to a contactless reader. The memory stores a second configuration data whose activation is required to expose the second application to a contactless reader. Said first and second configuration data specify short-range protocol settings. The multi-application contactless device includes a sensor configured to provide a value by evaluating the electromagnetic field generated by a contactless reader. The multi-application contactless device includes a selector unit configured to activate one of said first and second configuration data by using the value provided by the sensor.

Advantageously, the selector unit may be configured to activate a target configuration data belonging to a group including said first and second configuration data by recording said target configuration data in contactless settings as defined by ISO/IEC 14443, Mifare®, Felica®, ISO/IEC 15693 or NFC Forum Tag specifications.

Advantageously, the first configuration data may comply with either the ISO/IEC 14443 type A, Mifare®, Felica®, ISO/IEC 15693 or NFC Forum Tag specifications and said second configuration data may comply with the ISO/IEC 14443 type B, Mifare®, Felica®, ISO/IEC 15693 or NFC Forum Tag specifications.

Advantageously, the selector unit may be configured to deactivate the configuration data previously activated and to activate another configuration data each time the sensor detects said electromagnetic field.

Advantageously, the value may reflect the measured power level of the electromagnetic field, said selector unit may be configured to perform a comparison between said value and a preset threshold and said selector unit may be configured to activate one of the first and second configuration data according to the result of the comparison.

Advantageously, the selector unit may be configured to perform a detection of establishment of a short-range channel that is not followed by a successful execution of an application selection command and to activate one of the first and second configuration data according to the result of said execution.

Another object of the present invention is a computer-implemented method for managing a multi-application contactless device including a memory storing first and second applications, a first configuration data whose activation is required to expose the first application to a contactless reader and a second configuration data whose activation is required to expose the second application to a contactless reader. The method comprises a step in which a sensor belonging to said contactless device provides a value by evaluating the electromagnetic field generated by a contactless reader. The method comprises a step in which a selector unit belonging to said contactless device activates one of said first and second configuration data by using the value provided by the sensor.

Advantageously, the selector unit may perform activation of a target configuration data belonging to a group including said first and second configuration data by recording said target configuration data in contactless settings (14) as defined by ISO/IEC 14443, Mifare®, Felica®, ISO/IEC 15693 or NFC Forum Tag specifications.

Advantageously, the selector unit may deactivate the configuration data previously activated and may activate another configuration data each time the sensor detects said electromagnetic field.

Advantageously, the value may reflect the measured power level of the electromagnetic field and the selector unit may perform a comparison between said value and a preset threshold and then activate one of the first and second configuration data according to the result of the comparison.

Advantageously, the selector unit may perform a detection of establishment of a short-range channel that is not followed by a successful execution of an application selection command then may activate one of the first and second configuration data according to the result of said execution.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an architecture of a system comprising a contactless reader and a contactless device according to a first example of the invention;
- Figure 2 depicts a flow chart for the management of the application in a contactless device according to an embodiment of the invention; and
- Figure 3 depicts interactions between a contactless device and a reader according to an embodiment of the invention.

### (Detailed description of the preferred embodiments)

The invention may apply to any type of contactless device intended to communicate with a contactless reader through a short-range modulated magnetic field. In particular, the invention may apply to devices complying with the ISO/IEC14443, Mifare®, Felica®, ISO/IEC 15693 and NFC Forum Tag standard.

The invention may apply to contactless devices or Proximity IC Card (PICC) in many applicative domains, like e-Passport, e-Health, e-Access, e-payment, e-transport and so on. The invention may apply to contactless devices having any form factor like smartcards, key fobs or passports.

The current contactless profile is specified by the currently activated (i.e. active or current) configuration data. The active configuration data allows a contactless reader to identify and access the contactless application (stored in the contactless device) which is uniquely associated to the active configuration data.

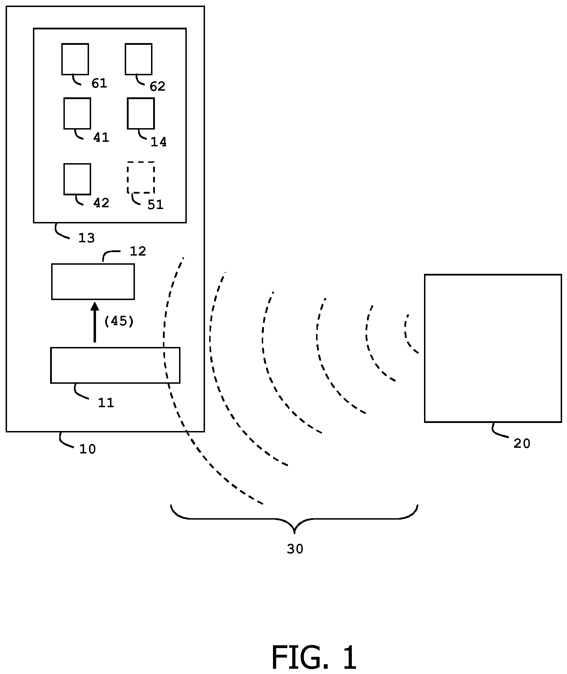

**Figure 1** shows an architecture of a system comprising a conventional contactless reader 20 and a contactless device 10 according to a first example of the invention. The contactless reader may be an access control reader for example. The contactless reader 20 comprises a communication unit (not shown) which is capable of generating a modulated electromagnetic field 30.

The contactless device 10 is a multi-application contactless device which includes a memory 13. The memory 13 stores a first application 61 and a first configuration data 41 whose activation is required to expose the first application 61 to the contactless reader 20. In other words, activation of the first configuration data 41 is required to allow the first application 61 to be visible and detectable by the contactless reader 20.

The memory 13 stores a second application 62 and a second configuration data 42 whose activation is required to expose the second application 62 to the contactless reader 20. Each of said first and second configuration data specifies short-range protocol settings.

It is assumed that only one configuration data can be activated at a time in the contactless device 10.

In one example the first configuration data 41 may comply with ISO/IEC 14443 type A, Mifare® or NFC Forum Tag standard while the second configuration data 42 may comply with the ISO/IEC 14443 type B, Felica® or ISO/IEC 15693 standard.

In one example, the first application 61 may be related to Identity domain (e.g. Passport) and the second application 62 may be related to Access management (e.g. Security domain).

In other examples, the applications may relate to Health domain, transport (ticketing) or banking domain (e.g. wallet or payment token).

The contactless device 10 may be a contactless card, a contactless badge or a contactless tag for instance. It comprises an antenna (not drawn) and a processor (not drawn) able to execute firmware instructions. Generally, the contactless device 10 has limited memory, power and computing resources.

The contactless device includes a sensor 11 able to provide a value 45 by evaluating the electromagnetic field 30 in which it is located. In the example of Figure 1, the electromagnetic field 30 is generated by the contactless reader 20. The contactless device includes a selector unit 12 which is configured to activate a configuration data stored in the memory 13 by using the value provided by the sensor 11. In other words, the selector unit 12 selects and activates one of the available configuration data according to the value provided by the sensor 11.

The selector unit 12 may be implemented in a software manner, in a hardware manner or in a combination of both.

Preferably, the selector unit 12 retrieves the relevant configuration data from a predefined repository containing all contactless configuration data available for the contactless device 10. Alternatively, the selector unit 12 may build on-the-fly the relevant configuration data by applying a set of predefined rules.

In a preferred embodiment, the selector unit 12 is designed to activate a configuration data by recording this configuration data in contactless settings 14 stored in the memory 13. Contactless settings can be implemented as a contactless profile table or as a registry.

A configuration data may comprise several contactless parameters. It is to be noted that each contactless parameters can be changed individually. For example, the current configuration data may be changed from Type A to Type B as defined by ISO/IEC14443 standard. In another example, each of the following parameters can be individually changed in the active configuration data: ATQA (Answer to request type A) and SAK (Select Acknowledge type A).

In one embodiment, the value 45 (provided by the sensor 11) can correspond to the detection of the presence of the electromagnetic field 30 by the sensor 11. The selector unit 12 can be configured to deactivate the configuration data previously activated (if any) and to activate another configuration data each time the sensor 11 detects an electromagnetic field. Thus the contactless device 10 can automatically perform a rotation of the current (i.e. active) configuration data as soon as the contactless device 10 is presented to the reader 20. For instance, assuming that the contactless device embeds three contactless applications, an automatic switch to the next application can be performed. The list of available configuration data can be managed in a cyclic way where the first data is considered as following the last data of the list.

Thus the user may present several times the contactless device in the field 30 of the reader 20 until the relevant configuration data is activated and the corresponding contactless application is triggered and establish an applicative session with the reader 20.

In one embodiment, the contactless device 10 can measure the strength of field 30 (thanks to the sensor 11) and update its own active contactless parameters (i.e. current configuration data) accordingly. The value 45 can reflect the power level of the electromagnetic field 30 measured by the sensor 11. The selector unit 12 can be configured to perform a comparison between the value 45 and a preset threshold 51. The selector unit 12 can be configured to activate one of the available configuration data according to the result of the comparison. For instance, readers deployed for access control can be assumed to generate electromagnetic fields having a power level higher than a predefined level. Thus contactless device 10 can be set to automatically select the first contactless application dedicated to access control service as soon as a field having power level greater than a preset level is detected.

In one embodiment, the contactless device 10 can detect that a short-range channel has been established with the reader 20 without a further successful select application command and update its own active contactless parameters (i.e. current configuration data) accordingly. The selector unit 12 can be configured to perform a detection of establishment of a short-range channel with the reader 20 and to check the result of the execution of the next application selection command received from the reader 20. If the currently activated configuration data corresponds to the application whose selection is requested by the selection command, the execution of the application selection command succeeds. If the activated configuration data does not correspond to the application whose selection is requested by the selection command, the execution of the application selection command does not succeed. The selector unit 12 can be configured to activate one available configuration data according to the result of the execution of the application selection command.

Thanks to this embodiment, an automatic switch to the next available contactless application can be performed by the contactless device 10. The list of available configuration data can be managed in a cyclic way. (I.e. rotation according to a predefined order in the list of pre-stored configuration data.)

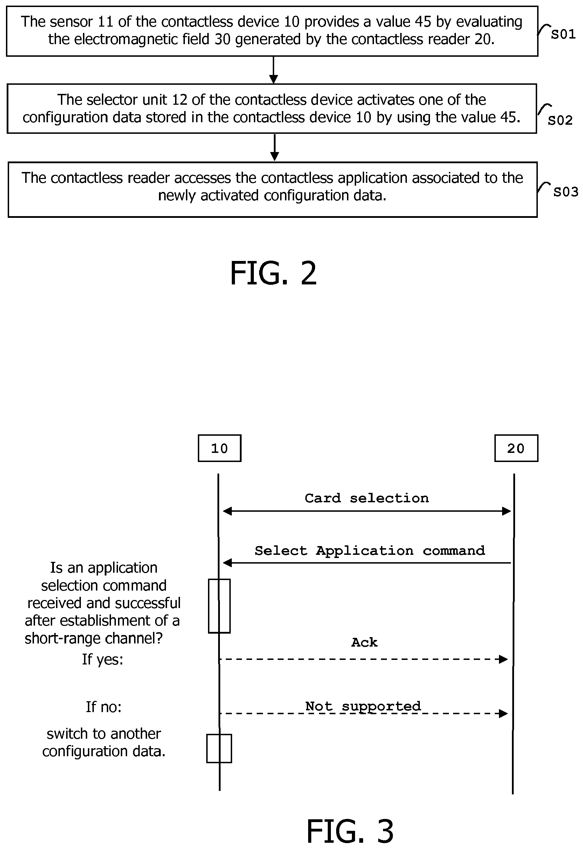

**Figure 3** shows a flowchart that exemplifies interactions between the contactless device 10 and a reader 20 according to the latter embodiment of the invention.

Firstly, the user approaches the contactless device 10 near the reader 20. As soon as the contactless is powered by the field 30, a handshake phase is initiated between the reader 20 and the contactless device 10. For instance, the handshake phase may run as an anti-collision procedure according to ISO/IEC 14443 type A (or type B) standard. After this phase, a short-range channel has been established between the reader 20 and the contactless device 10. A Card selection command can be sent by the contactless reader 20 to the contactless device 10.

Then the reader 30 sends a Select Application command which specifies a target contactless application to be selected. For instance, the Select Application command may specify a specific Application Identifier (AID).

The execution of the Select Application command fails or succeeds according to the currently active configuration data of the contactless device 10.

If the target contactless application to be selected cannot be selected (because its associated configuration data is not the active one) the selector unit 12 deactivates the configuration data previously activated (if any) and activates another configuration data. In one embodiment, the contactless device 10 can activate the configuration data associated to the target contactless application. (if available into the contactless device.) In another embodiment, the contactless device 10 can automatically perform a cyclic activation of the configuration data stored in the contactless device 10.

If the target contactless application is selected, the currently activated configuration data (i.e. the current contactless profile) is assumed to be the correct one and the applicative session can continue between the contactless device 10 and the reader 20.

**Figure 2** shows steps of a method for the management of a contactless application in the contactless device 10 according to an example of the invention.

At step S01, the sensor 11 of the contactless device 10 evaluates the electromagnetic field 30 generated by the contactless reader 20 and provides a value 45 depending on the result of the evaluation operation.

At step S02, the selector unit 12 of the contactless device activates one of the configuration data available in the contactless device 10 by using the value 45 provided by the sensor 11. Preferably, the selector unit 12 performs the activation of the selected (target) configuration data by recording the selected configuration data in contactless settings stored in a memory area of the contactless device 10. The memory area can be a contactless profile table or a profile file. As soon as the configuration data is activated in the contactless device 10, the contactless application associated to the newly activated configuration data is made accessible by the reader 30.

At step S03, the contactless reader can access the contactless application corresponding to the configuration data currently activated in the contactless device 10. It is to be noted that the access to application whose corresponding profile has been newly activated may require a new entry of the contactless device in the field of the contactless reader.

The invention is not limited to management of two configuration data. It allows to manage a large number of contactless applications embedded in a contactless device. For example, a contactless card may contain six contactless applications dedicated to as many services like a physical access control (for opening a Gate), two distinct purses, a logical access control (for logon in a computer), a transport application (for accessing a subway network) and an identity service.

Thanks to the invention, the contactless device can automatically self-adapt its own current contactless profile to fit the requirements of the contactless reader located in the proximity. An advantage of the invention is to allow the smoothly selection of the appropriate contactless application according to the need of the user of the contactless device.

An advantage of the invention is to be keep unchanged the already deployed contactless readers. The new contactless device of the invention is compatible with the existing parks of contactless readers.

Thanks to the invention, different contactless profiles of the contactless device can be activated and used at the same physical location. For example a user can use her contactless card to logon (using a contactless reader connected to her laptop) at her desk and then perform a banking transaction using her contactless card (with a second contactless reader) without moving in another place. (I.e. by staying at her desk.)

## Claims

1. A multi-application contactless device (10) including a memory storing both a first configuration data (41) whose activation is required to expose a first application (61) to a contactless reader (20) and a second configuration data (42) whose activation is required to expose a second application (62) to the contactless reader, said first and second configuration data specifying short-range protocol settings,
**characterized in that** said contactless device includes both a sensor (11) able to provide a value (45) by evaluating an electromagnetic field (30) generated by the contactless reader (20) and a selector unit (12) configured to activate one of said first and second configuration data by using said value.

2. A contactless device according to claim 1, wherein the selector unit (12) is configured to activate a target configuration data belonging to a group including said first and second configuration data by recording said target configuration data in contactless settings (14) as defined by ISO/IEC 14443, Mifare®, Felica®, ISO/IEC 15693 or NFC Forum Tag specifications.

3. A contactless device according to claim 1, wherein said first configuration data complies with either the ISO/IEC 14443 type A, Mifare®, Felica®, ISO/IEC 15693 or NFC Forum Tag specifications and wherein said second configuration data complies with the ISO/IEC 14443 type B, Mifare®, Felica®, ISO/IEC 15693 or NFC Forum Tag specifications.

4. A contactless device according to claim 1, wherein said selector unit (12) is configured to deactivate the configuration data previously activated and to activate another configuration data each time the sensor (11) detects said electromagnetic field.

5. A contactless device according to claim 1, wherein said value reflects the measured power level of the electromagnetic field, wherein said selector unit (12) is configured to perform a comparison between said value and a preset threshold (51) and wherein said selector unit (12) is configured to activate one of the first and second configuration data according to the result of the comparison.

6. A contactless device according to claim 1, wherein said selector unit (12) is configured to perform a detection of establishment of a short-range channel that is not followed by a successful execution of an application selection command and to activate one of the first and second configuration data according to the result of said execution.

7. A method for managing a multi-application contactless device (10) including a memory storing both a first configuration data whose activation is required to expose a first application to a contactless reader (20) and a second configuration data whose activation is required to expose a second application to the contactless reader,
**characterized in that** said method comprises the steps:
i) a sensor (11) of said contactless device provides a value by evaluating an electromagnetic field generated by the contactless reader (20),
ii) a selector unit (12) of said contactless device activates one of said first and second configuration data by using said value.

8. A method according to claim 7, wherein the selector unit (12) performs activation of a target configuration data belonging to a group including said first and second configuration data by recording said target configuration data in contactless settings (14) as defined by ISO/IEC 14443, Mifare®, Felica®, ISO/IEC 15693 or NFC Forum Tag specifications.

9. A method according to claim 7, wherein said first configuration data complies with either the ISO/IEC 14443 type A standard, Mifare®, Felica®, ISO/IEC 15693 or NFC Forum Tag standard and wherein said second configuration data complies with the ISO/IEC 14443 type B standard, Mifare®, Felica®, ISO/IEC 15693 or NFC Forum Tag standard.

10. A method according to claim 7, wherein said selector unit (12) deactivates the configuration data previously activated and activates another configuration data each time the sensor (11) detects said electromagnetic field.

11. A method according to claim 7, wherein said value reflects the measured power level of the electromagnetic field and wherein said selector unit (12) performs a comparison between said value and a preset threshold (51) then activates one of the first and second configuration data according to the result of the comparison.

12. A method according to claim 7, wherein said selector unit (12) performs a detection of establishment of a short-range channel that is not followed by a successful execution of an application selection command then activates one of the first and second configuration data according to the result of said execution.
